**Europäisches Patentamt**

**European Patent Office**

**Office européen des brevets**

(11) Veröffentlichungsnummer: **0 154 025**

**A1**

## (12) EUROPÄISCHE PATENTANMELDUNG

(21) Anmeldenummer: 84115955.1

(22) Anmeldetag: 20.12.84

(51) Int. Cl.⁴: **G 01 D 5/26**

(30) Priorität: 29.12.83 AT 4563/83

(43) Veröffentlichungstag der Anmeldung:
11.09.85 Patentblatt 85/37

(84) Benannte Vertragsstaaten:
AT BE CH DE FR GB IT LI LU NL SE

(71) Anmelder: INTERATOM Internationale Atomreaktorbau GmbH
Friedrich-Ebert-Strasse
D-5060 Bergisch Gladbach 1(DE)

(71) Anmelder: Fleck, Carl Maria, Dr.
Doktorberg 23, E5
A-2391 Kaltenleutgeben(AT)

(72) Erfinder: Fleck, Carl M., Prof. Dr.
Doktorberg 28 E 5
A-2391 Kaltenleutgeben(AT)

(74) Vertreter: Mehl, Ernst, Dipl.-Ing. et al,
Postfach 22 01 76
D-8000 München 22(DE)

(54) Verfahren zur direkten Umwandlung von Messgrössen in Veränderungen eines über Lichtleiter zu- und abgeleiteten Lichtsignals und Hybrid-Sensor zur Durchführung des Verfahrens.

(57) Die Erfindung betrifft einen Sensor zur direkten Umwandlung einer physikalischen Meßgröße in Änderungen eines Lichtsignals. Um eine Reproduzierbarkeit der Messungen auch bei sich ändernden Übertragungseigenschaften eines Lichtleiters zu gewährleisten, wird vorgeschlagen, in der Mezelle (1) außer der eigentlichen Messung an einer Meßmembran (5) eine zusätzliche Messung an einem Referenzelement (4) durchzuführen. Ein Teil des durch einen Lichtleiter (6a, 6b) einfallenden Lichtes wird an dem Referenzelement (4) reflektiert, während ein anderer Teil an dem von der Meßgröße beeinflußbaren Meßelement (5) reflektiert wird. Durch geeignete Filter (7) oder Beschichtungen werden die beiden Signale unterscheidbar, sofern nicht mit interferometrischen Methoden gemessen werden soll. Im einfachsten Fall kann die Austrittsfläche der Glasfaser (6a, 6b) als Referenzelement (4) ausgebildet werden.

FIG 1

0154025
83 P 6741 E

INTERATOM GmbH

D-5060 Bergisch Gladbach 1

Univ.-Prof. Dr. Carl M. Fleck

A-2391 Kaltenleutgeben

Verfahren zur direkten Umwandlung von Meßgrößen in Veränderungen eines über Lichtleiter zu- und abgeleiteten
Lichtsignals und Hybrid-Sensor zur Durchführung des Verfahrens

Die vorliegende Erfindung betrifft ein Verfahren zur
direkten Umwandlung von Meßgrößen in Veränderungen eines
über Lichtleiter zu- und abgeleiteten Lichtsignals und
einen Sensor zur Durchführung des Verfahrens. Sensoren,
welche ohne Zwischenschaltung elektronischer Bauteile
eine Meßgröße direkt in Veränderungen eines Lichtsignals
umwandeln, werden als "Hybrid-Sensoren" bezeichnet. In
manchen Bereichen der Technik ist es erstrebenswert, nicht
nur die Übertragungsleitungen für Meßsignale durch Lichtleiter zu ersetzen, sondern auch am Ort der Messung selbst
keine elektronischen Bauteile mehr vorzusehen. Dies gilt
insbesondere für Messungen unter schwierigen Bedingungen,
beispielsweise bei hoher Temperatur, hoher radioaktiver
Strahlenbelastung oder Störungen durch elektromagnetische
Wellen.

Aus der DE-OS 29 37 511 ist beispielsweise bekannt, daß die
Auslenkung einer verspiegelten Membranoberfläche dazu benutzt werden kann, einen über geeignete optische Mittel
zugeführten Lichtstrahl vorgegebener Intensität entsprechend dem gemessenen Druck derart abzulenken, daß die Intensität des wieder abzuführenden Lichtes in Abhängigkeit vom
gemessen Druck änderbar ist.

Khf/Bt 19.11.84

Weiterhin sind verschiedene Sorten von Hybrid-Sensoren bekannt, bei denen Meßgrößen direkt in eine Intensitätsänderung eines Lichtsignales umgewandelt werden.

Die bisher bekannten Hybrid-Sensoren weisen jedoch einen entscheidenden Nachteil auf, wenn sie im späteren Meßbetrieb wie elektronische Sensoren eingesetzt werden sollen. In einem solchen Fall ist es wünschenswert, daß die Lichtleiter mittels einfacher Steckverbindungen oder dergleichen miteinander oder mit einem elektronischen Auswertegerät verbunden werden können, wobei - anders als bei elektrischen Steckverbindungen - die Güte der Lichtleiterverbindung nicht vollkommen reproduzierbar ist. Durch Lösen und erneutes Zusammenstecken einer solchen Verbindung kann sich die Intensität des übertragenden Lichtsignals ohne Änderung der Meßgröße um einen erheblichen Betrag ändern.

Aufgabe der vorliegenden Erfindung ist daher ein Verfahren zur direkten Umwandlung von Meßgrößen in Veränderungen eines über Lichtleiter zu- und abgeleiteten Lichtsignals, welches unabhängig von der jeweiligen Übertragungsqualität des Lichtleiters und unabhängig von eventuellen Änderungen im Übertragungsweg präzise Messungen ermöglicht, sowie ein Hybrid-Sensor zur Durchführung des Verfahrens.

Zur Lösung dieser Aufgabe wird ein Hybrid-Sensor gemäß dem ersten Anspruch vorgeschlagen. Dieser Hybrid-Sensor weist außer dem eigentlichen Meßelement, welches insbesondere eine Membran oder ein Reflektor sein kann, noch ein zusätzliches Referenzelement auf, dessen Lage und Eigenschaften durch die Meßgröße nicht wesentlich veränderbar sind, wobei ein Teil des durch einen Lichtleiter zu dem Sensor gelangenden Lichtes von dem Referenzelement und ein anderer Teil des Lichtes von dem Meßelement zu dem Lichtleiter reflektierbar ist. Eine solche Anordnung kann auf zweierlei Art verwendet werden. Zunächst besteht bei der Verwendung von kohärent reflektierendem Reflektor und Referenzelement die Möglichkeit, Interferenzmessungen durchzuführen. Die Überlagerung der beiden reflektierten Lichtanteile führt zu Interferenzerscheinungen, wobei eine Veränderung des Meßelementes eine Verschiebung der entstehenden Interferenzlinien hervorruft, welche in einer Empfangseinheit gemessen und ausgewertet werden kann.

Ein Hybrid-Sensor mit einem Referenzelement bietet jedoch auch die weniger aufwendige Möglichkeit, die Intensität des vom Meßelement reflektierten Lichtes relativ zu der Intensität des vom Referenzelement reflektierten Lichtes zu messen, wodurch Schwankungen und Änderungen in der Übertragungsqualität eliminiert werden können. Um diese Meßmethode anwenden zu können, müssen jedoch die beiden von verschiedenen Stellen reflektierten Lichtanteile unterscheidbar sein.

Dazu wird im Anspruch 2 vorgeschlagen, daß im Strahlengang Mittel zur Selektion bzw. Trennung bewisser Teile des Lichtes nach Frequenz, Polarisation, und/oder anderen Eigenschaften vorhanden sein sollen, die eine spätere Unterscheidung des von dem Referenzelement reflektierten Signals von dem vom Meßelement reflektierten ermöglichen. Diese Lösung setzt voraus, daß von der Lichtquelle bereits zwei Anteile eingestrahlt werden, sei es mindestens zwei verschiedene Frequenzen, Polarisationsebenen oder dergleichen. Durch geeignete Filter läßt sich dann erreichen, daß im wesentlichen der eine Anteil von dem Meßelement und der andere Anteil von dem Referenzelement reflektiert wird,
wobei dann die Intensitäten der zurückgeworfenen Anteile
verglichen werden können.

In weiterer Ausgestaltung der Erfindung wird im Anspruch 3
vorgeschlagen, daß das Referenzelement und/oder das Meßelement mit frequenzselektiv reflektierenden Beschichtungen versehen sind bzw. aus frequenzselektiv reflektierendem Material bestehen. Frequenzselektive, d. h. "farbige"
Beschichtungen sind in großer Zahl bekannt. Beispielsweise
einfaches Brünieren des Meßelementes, sofern es sich um
ein metallisches Meßelement handelt, kann zur Unterscheidung der Lichtsignale ausreichen.

In spezieller Ausgestaltung der Erfindung wird in Anspruch 4 vorgeschlagen, daß das Referenzelement eine für
Licht teilweise, gegebenenfalls frequenzselektiv oder
polarisationsabhängig, durchlässige  und teilweise reflektierende Membran bzw. Fläche ist. Mit dieser Ausgestaltung
läßt sich auf einfache Weise die Trennung der Lichtsignale
durchführen, wobei die Trennung gleichzeitig mit der Erzeugung des Referenzsignals erfolgt. Da nicht alle Lichtleiter bei der Übertragung die Polarisationsebene eines
Lichtsignals erhalten, kommt die Verwendung von verschieden  polarisierten Lichtsignalen im allgemeinen nur bei
Verwendung von Mono-Mode-Fasern und Laserlicht in Betracht.

In spezieller Ausgestaltung der Erfindung wird im Anspruch 5 vorgeschlagen, daß das Referenzelement und/oder
das Meßelement aus einem Material bestehen, bzw. mit einem
Material dotiert oder beschichtet sind, welches einen Teil
des Lichts als Fluoreszenzstrahlung oder Phosphoreszenzstrahlung reflektiert. Bei Verwendung eines solchen Hybrid-
Sensors braucht von der Lichtquelle nur eine Wellenlänge eingestrahlt zu werden, da die zweite Wellenlänge, die zur Unterscheidung der beiden Signale benötigt wird, im Sensor selbst durch Fluoreszenz oder Phosphoreszenz erzeugt wird. Eine spätere Trennung durch Frequenzfilter oder dergleichen ist bei der Auswertung dann problemlos möglich. Die Phosphoreszenzstrahlung bietet zusätzlich die Möglichkeit, mit gepulstem Licht zu messen, wobei das Meß- bzw. das Referenzsignal durch Nachleuchten, also durch einen Laufzeitunterschied, ebenfalls getrennt werden kann, wenn auf optische Filter verzichtet werden soll.

Als besonders günstige Ausgestaltung der Erfindung wird im Anspruch 6 vorgeschlagen, daß die Austrittsfläche der Glasfaser als Referenzelement ausgebildet sein soll und/ oder mit einer selektiven, fluoreszierenden oder phosphoreszierenden Schicht versehen sein soll. Bei dieser Ausbildung können zusätzliche Einbauten in der Meßzelle ganz vermieden werden. Durch geeignete Bearbeitung der Austrittsfläche des Lichtleiters kann dort ein Teil des Lichtes reflektiert und ein anderer Teil durchgelassen werden. Dabei ist zusätzlich die Möglichkeit der frequenzselektiven Beeinflussung des Lichtes möglich. Außerdem ermöglicht diese Ausgestaltung der Erfindung, daß das Ende des Lichtleiters sehr nahe an das Meßelement herangeführt werden kann, wodurch die Genauigkeit der Messung erhöht wird.

In weiterer Ausgestaltung der Erfindung wird in Anspruch 7 vorgeschlagen, daß das Meßelement teilweise oder vollkommen inkohärent reflektierend ist oder eine Oberflächenbeschaffenheit hat, die das Licht mit einer Unschärfe im Reflektionswinkel, auch als Mattglanz bezeichnet, reflektiert. Je nach Meßaufgabe kann es im Einzelfall erwünscht sein, Interferenzerscheinungen ganz zu vermeiden, was durch inkohärente Reflektion erreicht wird. Außerdem sind mattglänzende Oberflächen unter Umständen leichter herstellbar oder korrosionsbeständiger als glänzende.

Alternativ dazu wird im Anspruch 8 vorgeschlagen, daß das Referenzelement und das Meßelement kohärent reflektierend sind und keine die Kohärenz der Lichtstrahlen verhindernden Bauteile im Strahlengang verwendet werden. Eine solche Ausführung des Hybrid-Sensors ermöglicht die Benutzung nach beiden bisher erwähnten Meßverfahren je nach Bedarf, nämlich die Messung von Interferenzen, wenn eine besonders hohe Meßgenauigkeit erzielt werden soll, oder den Vergleich von Referenz- und Meßsignal.

In spezieller Ausgestaltung der Erfindung wird im Anspruch 9 vorgeschlagen, daß das Meßelement so ausgelegt ist, daß im vorgesehenen Meßwertbereich seine Auslenkung wesentlich größer als die Wellenlänge des verwendeten Lichtes ist, beispielsweise größer als 10 $\mu$m. Diese Ausgestaltung ist besonders für eine Interferenzmessung von Bedeutung, und ermöglicht eine Messung durch bloßes Zählen von an einem Detektor vorbeiwandernden Interferenzlinien. Mit einem so ausgelegten Meßsystem lassen sich Meßgrößen sofort digital erfassen.

Eine andere erfindungsgemäße Ausgestaltung wird im Anspruch 10 beschrieben. Danach soll das Meßelement so ausgelegt sein, daß im vorgesehenen Meßwertbereich seine Auslenkung kleiner als die Wellenlänge des verwendeten Lichtes ist, beispielsweise kleiner als 1 $\mu$m. Diese Ausgestaltung ermöglicht auch bei Verwendung des Interferenzverfahrens eine analoge Intensitätsmessung im Bereich einer sich leicht verschiebenden Interferenzlinie. Diese Ausgestaltung kann beispielsweise zur Messung von Schall oder Körperschall benutzt werden.

In weiterer Ausgestaltung der Erfindung wird im Anspruch 11 vorgeschlagen, daß sich die optischen Wege, d. h. die geometrischen Wege multipliziert mit den jewei¨gen Brechungsindizes der Medien, des Meßsignals und des Referenzsignals von ihrer Trennung bis zur Überlagerung um weniger als 50 $\mu$m unterscheiden. Eine solche Anordnung bietet die Möglichkeit, Interferenzmessungen auch bei Verwendung von Licht mit einer verhältnismäßig kleinen Kohärenzlänge durchzuführen. Dabei hat eine kleine Kohärenzlänge den Vorteil, daß Störungen durch Reflektionen an weiter entfernt l¨egenden Bauteilen nicht stö¨ ¨. Außerdem sind Lichtquellen mit kleinen Kohärenzlängen wesentlich billiger herstellbar als beispielsweise Laser.

In Anspruch 12 wird weiterhin vorgeschlagen, daß das kohärent reflektierende Meßelement steif ausgebildet ist und die Auslenkung nur durch Körperschall oder durch eine Temperaturdehnung der Meßzelle selbst hervorgerufen wird. Die bisher beschriebenen Meßanordnungen eignen sich auch für die Messung sehr kleiner Veränderungen des Meßelementes, weshalb auch beispielsweise Körperschall aufgezeichnet werden kann.

Der bisher beschriebene Aufbau eines Hybrid-Sensors eignet sich für die Adaption an ganz verschiedene Meßelemente. In Anspruch 13 wird dazu vorgeschlagen, daß das Meßelement mit einem auf die jeweilige Meßgröße durch Ausdehnung, Verschiebung oder Formänderung reagierenden Meßsystem verbunden ist, beispielsweise mit einem auf Temperatur, radioaktive Strahlen, Neutronen, Druck, Schall oder Beschleunigung reagierenden System. Entsprechende erfindungsgemäße Ausführungen einiger solcher Meßsysteme sind in der Zeichnung und der zugehörigen Beschreibung noch näher erläutert.

In besonderer Ausgestaltung der Erfindung wird im Anspruch 14 vorgeschlagen, daß das Meßelement mit einem stark auf die Meßgröße reagierenden Bauteil und das Referenzelement mit einem nicht oder weniger auf die Meßgröße reagierenden Bauteil verbunden ist. Nicht in allen Meßfällen wird sich die Forderung, daß das Referenzelement vollkommen unbeweglich in Bezug auf den Lichtleiter montiert sein soll, verwirklichen lassen. Gemäß Anspruch 14 sind jedoch Relativmessungen auch dann möglich, wenn Referenzelement und Meßelement verschieden stark auf die Meßgröße reagieren.

In den folgenden Ansprüchen werden erfindungsgemäße Verfahren zur Erfassung von physikalischen Meßgrößen mit den bisher beschriebenen Hybrid-Sensoren angegeben.

Anspruch 15 betrifft ein erfindungsgemäßes Verfahren zur Erfassung von physikalischen Meßgrößen wie Druck, Temperatur, radioaktive Strahlung und dergleichen, welche die räumliche Lage und/oder Form und/oder optischen Eigenschaften eines in einer Meßzelle angeordneten Meßelementes beeinflussen, wobei mittels eines Lichtleiters Licht zu dem Meßelement geleitet und reflektiertes Licht zu einer Empfangseinheit zurückgeführt wird. Dabei werden erfindungsgemäß die in die Meßzelle geleiteten Lichtquellen in mindestens zwei Anteile aufgespalten. Der eine Anteil wird vorwiegend zu einem Referenzelement geleitet, welches keinen oder nur geringen Veränderungen durch die zu messende Größe unterliegt, und von dort reflektiert. Der andere Anteil wird vorwiegend zu dem Meßelement geleitet und von dort mit entsprechend dem Wert der zu messenden Größe veränderter Amplitude , Intensität, Frequenz, Laufzeit, Phasenlage und/oder Polarisation reflektiert. Mindestens einer der Anteile wird auf seinem Weg durch geeignete Mittel in Polarisation, Frequenz, Laufzeit und/oder Phasenlage
so verändert, daß eine Unterscheidung der reflektierten
Anteile, bzw. eine Interferenzmessung möglich ist, wobei
die Aufspaltung in zwei Anteile und/oder Veränderung eines
der beiden Anteile auch von dem Referenzelement und/oder
dem Meßelement selbst in Mehrfachfunktion bewirkt werden
kann. Die reflektierten und zurückgeführten Anteile werden in der Empfangseinheit verglichen bzw. interferometrisch ausgewertet, wodurch die Meßgröße unter Ausschaltung
von Störeinflüssen bestimmt werden kann. Dieses prinzipielle Verfahren, welches anhand der Zeichnung noch näher
erläutert wird, ermöglicht eine präzise Messung auch dann,
wenn die Übertragungsqualität des Lichtleiters sich ändert.

In weiterer Ausgestaltung der Erfindung wird in Anspruch
16 vorgeschlagen, daß die Aufspaltung der Lichtanteile
durch einen teilweise durchlässigen Spiegel oder durch ein
ähnlich wirkendes optisches Bauteil erfolgt und daß die
Unterscheidbarkeit der Anteile durch ein Frequenzfilter,
Polarisationsfilter, oder durch frequenzverändernde Beschichtungen (fluoreszierend, phosphoreszierend) hergestellt wird.

Weiterhin wird in Anspruch 17 vorgeschlagen, daß das Licht
mit mindestens zwei deutlich unterscheidbaren Frequenzen
zur Meßzelle geführt wird, wobei durch geeignete Filter
bewirkt wird, daß das Licht einer ersten Frequenz zum ganz
überwiegenden Teil vom Referenzelement reflektiert und zu
einem Empfänger geleitet wird, während das Licht einer
zweiten Frequenz zum ganz überwiegenden Teil vom Meßelement
reflektiert und zu einem zweiten Empfänger geleitet wird.
Eine schematische Anordnung zur Durchführung dieses Verfahrens wird ebenfalls in der Zeichnung noch näher erläutert. Die verwendeten Frequenzen sollten zwar deutlich unterscheidbar sein, jedoch sollten sie sich nicht so stark unterscheiden, daß unterschiedliche Effekte durch Dispersion oder dergleichen die zwei Signale unterschiedlich beeinflussen.

Alternativ wird in Anspruch 18 vorgeschlagen, daß Licht von nur einer Lichtquelle zur Meßzelle geführt wird, wobei dieses Licht eine geeignete Frequenz und/oder Bandbreite aufweisen muß. Durch eine fluoreszierende oder phosphoreszierende Schicht auf dem Referenzelement und/ oder dem Meßelement wird eine zusätzliche unterscheidbare Frequenz erzeugt, die die spätere Unterscheidung von Meßsignal und Referenzsignal durch geeignete Filter ermöglicht. Die ursprünglich verwendete Lichtfrequenz muß geeignet sein, die Fluoreszenz- bzw. Phosphoreszenzstrahlung anzuregen.

In spezieller Ausgestaltung der Erfindung wird in Anspruch 19 vorgeschlagen, die Messung mit gepulstem Licht durchzuführen. Eine phosphoreszierende Schicht auf dem Referenzelement oder dem Meßelement bewirkt dabei eine zeitliche Verzögerung eines der beiden reflektierten Lichtsignale, wodurch diese zeitlich unterschieden und ausgewertet werden können. Diese Meßmethode, die sich bevorzugt für quasistatische Vorgänge eignet, erlaubt eine Messung ohne die Verwendung von optischen Filtern mit nur einer Lichtquelle und nur einem optischen Empfänger, wobei die Signale lediglich zeitlich unterschieden werden. Alle Schwankungen im gesamten Meßsystem betreffen daher gleichermaßen das Referenzsignal und das Meßsignal, wodurch die meisten Störungen eliminiert werden können.

Ausführungsbeispiele der Erfindung und schematische Darstellungen von verschiedenen Meßanordnungen sind in der Zeichnung dargestellt.

Figur 1 zeigt in stark vereinfachter Darstellung den prinzipiellen Aufbau eines erfindungsgemäßen Hybrid-Sensors,
Figuren 2, 3 und 4 zeigen verschiedene Meßanordnungen zur Durchführung des erfindungsgemäßen Verfahrens,
Figur 5 zeigt eine Meßanordnung für die Messung mit zwei verschiedenen Frequenzen,
die Figuren 6, 7, 8, 9 und 10 zeigen verschiedene erfindungsgemäße Meßelemente in schematischer Darstellung mit ihren erfindungswesentlichen Teilen.

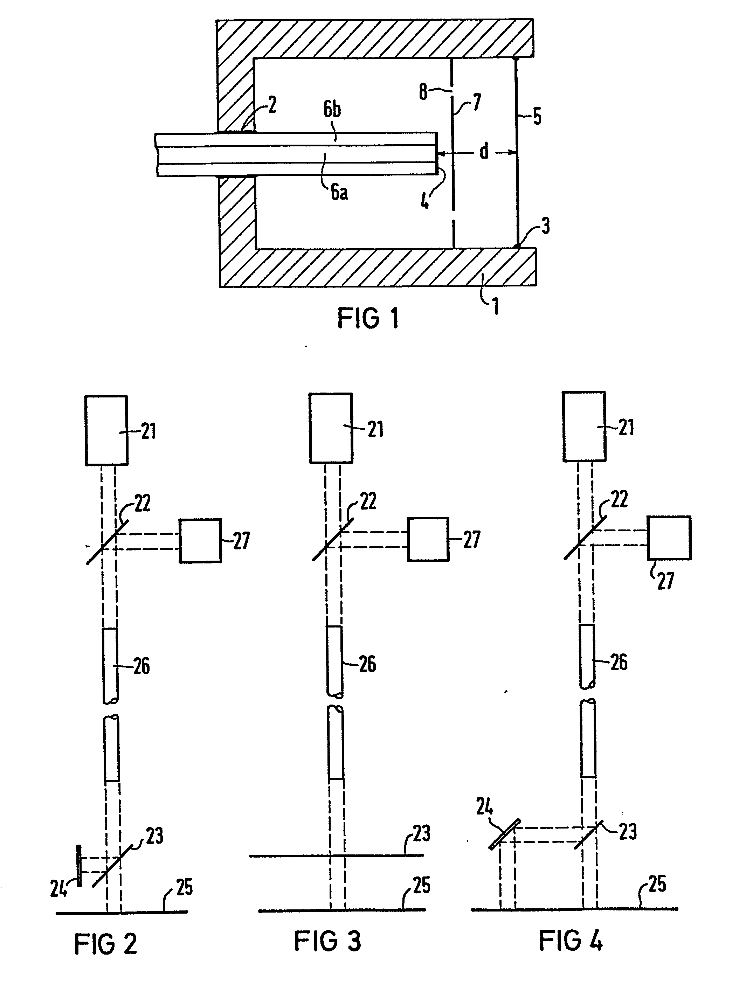

Figur 1 zeigt eine Meßzelle 1 in welche ein durch eine dichte Durchführung 2 geführter Lichtleiter 6a, 6b hineinragt. An der Vorderseite wird die Meßzelle 1 mit einer Membran 5 verschlossen. Die Membran kann beispielsweise mit Hilfe einer Schweißnaht 3 befestigt sein. Der Lichtleiter besteht aus einer Kernfaser 6a und dem Mantel 6b . Das vordere Ende des Lichtleiters bildet ein Referenzelement 4 , an welchem ein Teil des Lichtes reflektiert wird. Dabei kann dieses Referenzelement 4 auch zusätzlich mit einer frequenzselektiven, fluoreszierenden oder phosphoreszierenden Schicht versehen sein oder als Polarisationsfilter ausgebildet sein. Je nach Anwendungsfall kann auch die Membran 5 mit einer entsprechenden Beschichtung versehen sein.

Die Verwendung des Glasfaserendes als Referenzelement, gegebenenfalls mit geeigneten Beschichtungen, ist jedoch nicht die einzige Möglichkeit zur Erzeugung eines Referenzsignals. Es besteht auch die Möglichkeit zwischen das Ende des Lichtleiters 6a, 6b und die Membran 5 beispielsweise eine teilweise lichtdurchlässige Membran einzubringen. Dabei kann es sich beispielsweise um ein Polarisationsfilter, um eine halbverspiegelte Membran oder um
eine frequenzselektive Membran handeln. Durch geeignete
Mittel, beispielsweise Druckentlastungsöffnungen 8 sollte
diese Zwischenmembran 7 daran gehindert sein, Bewegungen
der Meßmembran 5 mitzumachen. Der hier schematisch dargestellte Hybrid-Sensor kann auf verschiedene Weise bei
Messungen betrieben werden. Er ermöglicht einerseits Interferenzmessungen, wenn kohärente Reflektoren verwendet werden, andererseits bietet er die Möglichkeit, das von der
Meßmembran 5 reflektierte Signal relativ zu dem von dem
Referenzelement 4 bzw. 7 reflektierten Signal zu
messen.

Beispiele für erfindungsgemäße Meßanordnungen, in stark
vereinfachender und schematischer Darstellung, sind in Fig.
2, 3 bzw. 4 dargestellt. Figur 2 zeigt eine Anordnung, wie
sie zur Interferenzmessung oder bei der Verwendung von
phosphoreszierenden Beschichtungen Verwendung finden kann.
Das Licht einer Lichtquelle 21 wird durch einen halbdurchlässigen Spiegel 22 in einen Lichtleiter 26 eingekoppelt. In der Meßzelle gelangt das Licht wiederum zu
einem halbdurchlässigen Spiegel 23 und von dort einerseits zu einem Referenzelement 24 und andererseits zu
einem Meßelement 25 . Das reflektierte Licht von beiden
Stellen wird zum Lichtleiter 26 zurückgeworfen und nach
Auskopplung mittels des halbdurchlässigen Spiegels 22

0154025
83 P 6741 E

zum Detektor 27 geleitet. Der Detektor 27 ist entweder ein interferometrisches Meßgerät oder aber bei Verwendung phosphoreszierender Beschichtungen ein zeitauflösendes Vergleichsmeßgerät. In Figur 3 ist gezeigt, daß ein halbdurchlässiger Spiegel 22 auch gleichzeitig Referenzelement sein kann, wodurch sich der Aufbau der Meßzelle vereinfacht. Andererseits ist in Figur 2c dargestellt, daß die Referenzmessung auch einen komplizierteren Strahlengang haben kann. In Figur 4 wird nicht nur das Meßsignal von dem Meßelement 25 reflektiert, sondern auch das Referenzsignal, allerdings an einer anderen Stelle. Ist beispielsweise das Meßelement eine Membran, so kann das Referenzsignal beispielsweise in der Nähe der Befestigungspunkte der Membran gewonnen werden, wohingegen das Meßsignal an der am stärksten bewegten Stelle reflektiert wird. Diese Anordnung ist beispielsweise dann von Interesse, wenn zu erwarten ist, daß sich die Oberflächenbeschaffenheit der Membran im Laufe der Zeit verändert. In diesem Falle ist es sinnvoll, daß Referenzsignal von der gleichen Oberfläche, jedoch an einer möglichst wenig beweglichen Stelle zu gewinnen.

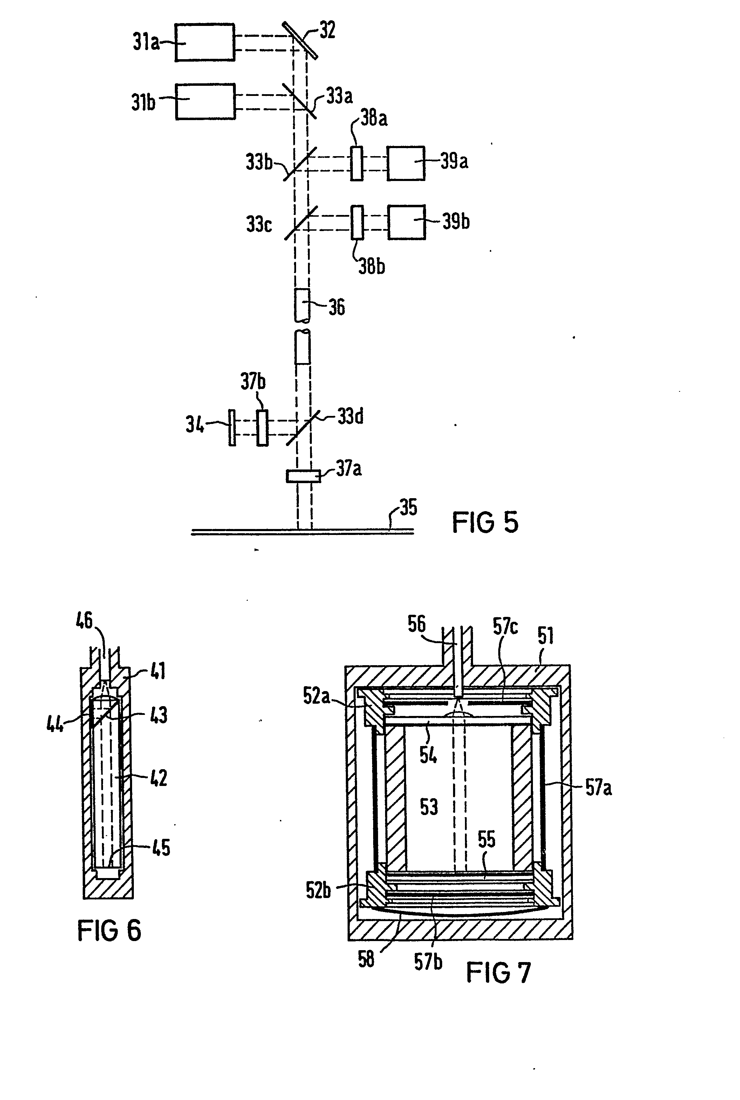

Figur 5 zeigt den prinzipiellen Aufbau einer Meßanordnung mit zwei verschiedenen Frequenzen. Über geeignete Ein- und Auskoppelvorrichtungen, hier in der Zeichnung als Spiegel 32 und halbdurchlässige Spiegel 33a, 33b, 33c dargestellt, wird Licht mit zwei verschiedenen Frequenzen aus den zwei Lichtquellen 31a, 31b in den Lichtleiter 36 eingekoppelt. Prinzipiell kann natürlich auch eine Lichtquelle mit einem größeren Frequenzbereich oder mit mindestens zwei diskreten Frequenzen benutzt werden. In der Meßzelle wird das Licht beispielsweise durch einen halbdurchlässigen Spiegel 33d in zwei Anteile aufgespalten. Durch ein Frequenzfilter 37a wird nur Licht einer bestimmten Frequenz zum Meßelement 35 durchgelassen und von dort reflektiert. Ein Frequenzfilter 37b für die zweite verwendete Frequenz läßt nur Licht dieser Frequenz zum Referenzelement 34 hindurch. Die reflektierten Signale, von nunmehr verschiedener Frequenz werden zurück in den Lichtleiter 36 geworfen und an dessen Ende mittels geeigneter Vorrichtungen 33b, 33c ausgekoppelt. Durch Frequenzfilter 38a bzw. 38b gelangen die verschiedenen Frequenzen zu den zwei Detektoren 39a bzw. 39b , deren Ausgangssignale verglichen werden können und so den gewünschten Meßwert liefern. Statt der Frequenzfilter in der Meßzelle können auch geeignete, frequenzselektiv reflektierende Beschichtungen auf dem Referenzelement 34 und dem Meßelement 35 Verwendung finden.

Die folgenden Figuren zeigen verschiedene auf spezifische Anwendungsfälle orientierte Sensoren in stark vereinfachender Darstellung, lediglich mit ihren erfindungswesentlichen Einzelteilen.

Figur 6 stellt eine Anordnung von zwei stark unterschiedlich langen optischen Wegen in einem optischen Element 42 dar, das zur Messung der Temperatur aber auch zur Änderung der optischen Eigenschaften in Feldern oder unter Strahlungseinfluß verwendet werden kann. In dieser Anordnung sind der Meßreflektor 45 und der Referenzreflektor 44 weit voneinander entfernt und in einem Block 42 integriert. Eine halbverspiegelte Grenzfläche 43 trennt das vom Lichtleiter 46 zugeführte Licht in zwei Anteile. Das ganze System ist in ein Gehäuse 41 eingebettet. Ändert sich in Folge des Einflusses einer physikalischen Größe die Länge des Körpers 42 , so ändert sich entsprechend das Lichtsignal.

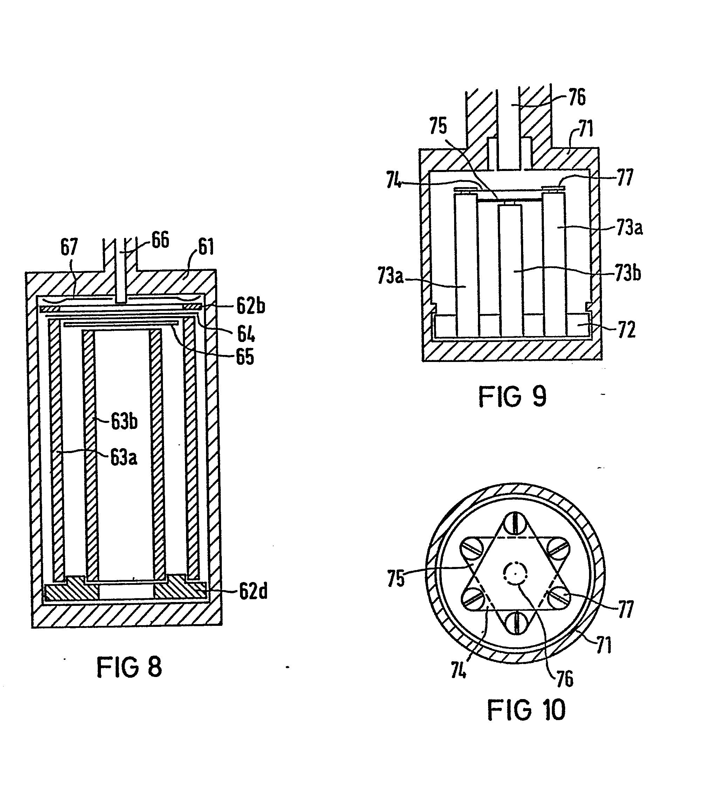

Figur 7 zeigt eine Meßzelle 51 , die mit Einbauten zur Messung von radioaktiver Strahlung versehen ist. Ein Reaktionszylinderring 53 erwärmt sich bei radioaktiver Bestrahlung. Dabei wird die absolute Ausdehnung des Reaktionszylinderringes 53 gemessen. Das durch einen Lichtleiter 56 zugeführte Lichtsignal wird von einer halbdurchlässigen Referenzfläche 54 teilweise reflektiert und teilweise durchgelassen. Der durchgelassene Teil gelangt zum Meßreflektor 55 und wird von dort reflektiert. Je nach Ausdehnung des Reaktionszylinderringes 53 ändert sich der Abstand von Referenzreflektor 54 und Meßreflektor 55 . Eine Feder 58 stützt die Meßvorrichtung ab und ermöglicht die notwendigen Dehnbewegungen.Der Reaktionszylinderring 53 ist in entsprechenden rotationssymmetrischen Formstücken 52a, 52b gehaltert, welche außerdem noch wärmedämmende Schutzschilde 57a, 57b, 57c halten. Solche Wärmedämmungsmaßnahmen erhöhen die Empfindlichkeit der Meßzelle. Je nach Wahl des Materials für den Reaktionszylinderring 53 kann die Meßzelle besonders empfindlich für verschiedene Arten gemacht werden. Bei einem Reaktionszylinderring aus Schwermetall ergibt sich eine besondere Empfindlichkeit für Gammastrahlung, bei Verwendung von $B^{10}$ oder $U^{235}$ ergibt sich eine hohe Empfindlichkeit für Neutronen.

Während die Meßanordnungen der Figuren 6 und 7 einen verhältnismäßig großen Abstand zwischen Meßelement und Referenzelement aufweisen, wodurch sie sich hauptsächlich für interferometrische Messungen eignen, ist in Figur 6 eine Anordnung gezeigt, welche sich durch einen geringen Abstand von Referenzelement 64 und Meßelement 65 auszeichnet. In einer Meßzelle 61 sind konzentrisch ineinander zwei Zylinderringe angeordnet, von denen einer unter dem Einfluß der zu messenden Größe, beispielsweise der Temperatur, eine große Ausdehnung zeigt, während der andere keine oder nur eine geringe Ausdehnung erfährt. Bei der gezeigten Vorrichtung weist der Zylinderring 63b eine große Ausdehnung unter Einfluß der Meßgröße auf, während der äußere Zylinderring 63a , der den Referenzreflektor trägt, eine ganz geringe Ausdehnung aufweist. Die Zylinderringe 63a, 63b werden von Halteelementen 62a, 62b gehalten und von einer Feder 67 in ihrer Lage fixiert. Das Licht gelangt durch den Lichtleiter 66 zunächst zu der nicht oder nur wenig beweglichen halbdurchlässigen Referenzmembran 64 und von dort zum Meßreflektor 65 . Der Meßreflektor 65 ist auf dem Zylinderring 63b befestigt und verschiebt sich entsprechend der Ausdehnung des Zylinderrings 63b .

Fig. 9, 10 zeigen in einer ähnlichen Anordnung wie bei Fig. 8 eine Strahlungsmeßzelle, und zwar in Figur 9 im Längsschnitt und in Figur 10 als Querschnitt. Ein halbdurchlässiges Referenzelement 74 wird von drei Säulen 73a getragen. Ein Meßreflektor 75 wird ebenfalls von drei Säulen 73b getragen, wobei alle Säulen 73a, 73b in einer Grundplatte 72 verankert sind. Die den Referenzreflektor 74 tragenden Säulen 73a bestehen aus einem anderen Material als die den Meßreflektor 75 tragenden Säulen 73b . Dabei ist der Einfluß der Meßgröße auf die den Referenzreflektor 4 tragenden Säulen 73a möglichst gering, während der Einfluß auf die den Meßreflektor 75 tragenden Säulen 73b groß ist. Die ganze Anordnung ist in einem Gehäuse 71 untergebracht, in welches Licht durch den Lichtleiter 76 zugeführt wird. Referenz- und Meßreflektor 74 bzw. 75 sind mittels Schrauben 77 auf den Säulen 73a, 73b befestigt. Die Länge der Säulen ist so bemessen, daß das Produkt aus Länge und linearem Wärmedehnungskoeffizienten für beide Stoffe gleich ist, während die Absorptionseigenschaften hinsichtlich einer Strahlenart oder Neutronenenergie unterschiedlich sind. Auf diese
Weise ist der Abstand zwischen Referenzreflektor 74 und
Meßreflektor 75 temperaturunabhängig, aber proportional
der einfallenden Strahlung.

Die in der Zeichnung angegebenen erfindungsgemäßen Ausführungen von Hybrid-Sensoren sind nur spezielle Beispiele
für die Vielfalt der Variationsmöglichkeiten der Erfindung.
Prinzipiell können alle physikalischen Größen, die die
Länge oder Lage eines Körpers beeinflussen, gemessen werden.

INTERATOM GmbH     -18-

D-5060 Bergisch Gladbach 1


Univ.-Prof. Dr. Carl M. Fleck

A-2391 Kaltenleutgeben



Verfahren zur direkten Umwandlung von Meßgrößen in Veränderungen eines über Lichtleiter zu- und abgeleiteten
Lichtsignals und Hybrid-Sensor zur Durchführung des Verfahrens


Patentansprüche


1. Hybrid-Sensor zur direkten Umwandlung einer Meßgröße
in Veränderungen von über Lichtleiter (6a, 6b; 26; 36;
46; 56; 66; 76) zu- und abgeleiteten Lichtsignalen, wobei
die Meßgröße die räumliche Lage und/oder Form und/oder
optischen Eigenschaften eines Meßelementes (5; 25; 35;
45; 55; 65; 75), insbesondere einer Membran oder eines
Reflektors, beeinflußt und wobei das Meßelement (5; 25;
35; 45; 55; 65; 75) im Lichtweg der aus einem Lichtwellenleiter (6a, 6b; 26; 36; 46; 56; 66; 76) bei der Messung
austretenden Lichtstrahlen liegt und den Strahlengang und/
oder sonstige Eigenschaften der Lichtsignale beeinflußt,
d a d u r c h   g e k e n n z e i c h n e t ,
daß ein Referenzelement (4; 23, 24; 34; 44; 54; 64; 74)
mit durch die Meßgröße nicht wesentlich veränderbarer
Lage zu dem Lichtleiter (6a, 6b; 26; 36; 46; 56; 66; 76)
und mit durch die Meßgröße nicht wesentlich veränderbaren
Eigenschaften in dem Sensor angeordnet ist, wobei ein Teil
des durch den Lichtleiter (6a, 6b; 26; 36; 46; 56; 66; 76)
zu dem Sensor gelangenden Lichtes von dem Referenzelement
(4; 23, 24; 34; 44; 54; 64; 74) und ein anderer Teil des
Lichtes von dem Meßelement (5; 25; 35; 45; 55; 65; 75) zu


Khf/Bt 19.11.84

dem Lichtle͏r (6a, 6b; 26; 36; 46; 56; 66; 76) reflektierbar ist.

2. Hybrid-Sensor nach Anspruch 1,
d a d u r c h   g e k e n n z e i c h n e t ,
daß im Strahlengang Mittel (7; 37a, 37b; 38a, 38b) zur
Selektion bzw. Trennung gewisser Teile des Lichtes nach
Frequenz, Polarisation und/oder anderen Eigenschaften
vorhanden sind, die eine spätere Unterscheidung des von
dem Referenzelement (4; 23, 24; 34; 44; 54; 64; 74) reflektierten Signals von dem vom Meßelement (5; 25; 35;
45; 55; 65; 75) ermöglichen.

3. Hybrid-Sensor nach Anspruch 2,
d a d u r c h   g e k e n n z e i c h n e t ,
daß Referenzelement (4; 23, 24; 34; 44; 54; 64; 74) und/
oder Meßelement (5; 25; 35; 45; 55; 65; 75) mit frequenzselektiv reflektierenden Beschichtungen versehen
sind, bzw. aus frequenzselektiv reflektierendem Material
bestehen.

4. Hybrid-Sensor nach einem der vorhergehenden Ansprüche,
d a d u r c h   g e k e n n z e i c h n e t ,
daß das Referenzelement (4; 23; 54; 64; 74) eine für Licht
teilweise, ggf. frequenzselektiv oder polarisationsabhängig, durchlässige und teilweise reflektierende Membran
bzw. Fläche ist.

5. Hybrid-Sensor nach einem der vorhergehenden Ansprüche,
d a d u r c h   g e k e n n z e i c h n e t ,
daß das Referenzelement (4; 23, 24; 34; 44; 54; 64; 74)
und/oder das Meßelement (5; 25; 35; 45; 55; 65; 75) aus
einem Material bestehen, bzw. mit einem Material dotiert
oder beschichtet sind, welches einen Teil des Lichtes als

0154025

Fluoreszenzstrahlung oder Phosphoreszenzstrahlung reflektiert.

6. Hybrid-Sensor nach einem der vorhergehenden Ansprüche,
d a d u r c h   g e k e n n z e i c h n e t ,
daß die Austrittsfläche der Glasfaser (6a, 6b) als Referenzelement (4) ausgebildet ist und/oder mit einer
selektiven, fluoreszierenden oder phosphoreszierenden
Schicht versehen ist.

7. Hybrid-Sensor nach einem der vorhergehenden Ansprüche,
d a d u r c h   g e k e n n z e i c h n e t ,
daß das Meßelement (5; 25; 35; 45; 55; 65; 75) teilweise
oder vollkommen inkohärent reflektierend ist oder eine
Oberflächenbeschaffenheit hat, die das Licht mit einer
Unschärfe im Reflektionswinkel (Mattglanz) reflektiert.

8. Hybrid-Sensor nach einem der Ansprüche 1 - 6,
d a d u r c h   g e k e n n z e i c h n e t ,
daß das Referenzelement (4; 23, 24; 34; 44; 54; 64; 74)
und das Meßelement (5; 25; 35; 45; 55; 65; 75) kohärent
reflektierend sind und keine die Kohärenz der Lichtstrahlen verhindernden Bauteile in Strahlengang verwendet
werden.

9. Hybrid-Sensor nach Anspruch 8,
d a d u r c h   g e k e n n z e i c h n e t ,
daß das Meßelement (5; 25; 35; 45; 55; 65; 75) so ausgelegt ist, daß im vorgesehenen Meßwertbereich seine Auslenkung wesentlich größer als die Wellenlänge des verwendeten Lichtes ist, beispielsweise größer als 10 $\mu$m.

**0154025**

10. Hybrid-Sensor nach Anspruch 8,

d a d u r c h   g e k e n n z e i c h n e t ,

daß das Meßelement (5; 25; 35; 45; 55; 65; 75) so ausgelegt ist, daß im vorgesehenen Meßwertbereich seine Auslenkung kleiner als die Wellenlänge des verwendeten
Lichtes ist, beispielsweise kleiner als 1 $\mu$m.

11. Hybrid-Sensor nach Anspruch 8, 9 oder 10,

d a d u r c h   g e k e n n z e i c h n e t ,

daß sich die optischen Wege, d. h. die geometrischen
Wege multipliziert mit den jeweiligen Brechungsindizes
der Medien, des Meßsignals und des Referenzsignals von
ihrer Trennung bis zur Überlagerung um weniger als 50 $\mu$m
unterscheiden.

12. Hybrid-Sensor nach Anspruch 8, 10 oder 11,

d a d u r c h   g e k e n n z e i c h n e t ,

daß das kohärent reflektierende Meßelement (5; 25; 35)
steif ausgebildet ist und die Auslenkung nur durch Körperschall oder durch eine Temperaturdehnung der Meßzelle
selbst hervorgerufen wird.

13. Hybrid-Sensor nach einem der vorhergehenden Ansprüche,

d a d u r c h   g e k e n n z e i c h n e t ,

daß das Meßelement (5; 25; 35; 45; 55; 65; 75) mit einem
auf die jeweilige Meßgröße durch Ausdehnung, Verschiebung
oder Formänderung reagierenden Meßsystem verbunden ist,
beispielsweise mit einem auf Temperatur, radioaktive
Strahlen, Neutronen, Druck, Schall oder Beschleunigung reagierenden System.

14. Hybrid-Sensor nach Anspruch 13,

d a d u r c h   g e k e n n z e i c h n e t ,

daß das Meßelement (5; 25; 35; 45; 55; 65; 75) mit einem stark auf die Meßgröße reagierenden Bauteil (42; 53; 63b; 73b) und das Referenzelement (4; 23, 24; 34; 44; 54; 64; 74) mit einem nicht oder weniger auf die Meßgröße reagierenden Bauteil (41; 51, 52a; 63a, 73a) verbunden ist.

15. Verfahren zur Erfassung von physikalischen Meßgrößen wie Druck, Temperatur, radioaktive Strahlung und dergleichen, welche die räumliche Lage und/oder Form und/ oder optischen Eigenschaften eines in einer Meßzelle (1; 21; 31; 41; 51; 61; 71) angeordneten Meßelementes (5; 25; 35; 45; 55; 65; 75) beeinflussen, wobei mittels eines Lichtleiters (6a, 6b; 26; 36; 46; 56; 66; 76) Licht zu dem Meßelement (5; 25; 35; 45; 55; 65; 75) geleitet und reflektiertes Licht zu einer Empfangseinheit zurückgeführt wird,

g e k e n n z e i c h n e t   d u r c h   folgende Merkmale:

a) Die in die Meßzelle (1; 21; 31; 41; 51; 61; 71) geleiteten Lichtwellen werden in mindestens zwei Anteile aufgespalten.

b) Der eine Anteil wird zu einem Referenzelement (4; 23, 24; 34; 44; 54; 64; 74) geleitet, welches keinen oder nur geringen Veränderungen durch die zu messende Größe unterliegt, und von dort reflektiert.

c) Der andere Anteil wird zu dem Meßelement (5; 25; 35; 45; 55; 65; 75) geleitet und von dort mit entsprechend dem Wert der zu messenden Größer veränderter Amplitude, Intensität, Frequenz, Laufzeit, Phasenlage und/oder Polarisation reflektiert.

d) Mindestens einer der Anteile wird auf seinem Weg durch geeignete Mittel (7; 37a, 37b, 38a, 38b) so in Polarisation, Frequenz, Laufzeit und/oder Phasenlage verändert, daß eine Unterscheidung der reflektierten Anteile, bzw.

0154025

eine Interferenzmessung möglich ist, wobei die Aufspaltung in zwei Anteile und/oder Veränderung eines oder beider Anteile auch von dem Referenzelement (4; 23, 24; 34; 44; 54; 64; 74) und/oder dem Meßelement (5; 25; 35; 45; 55; 65; 75) in Mehrfachfunktion bewirkt werden kann.

e) Die reflektierten und zurückgeführten Anteile werden in der Empfangseinheit (27; 39a, 39b) verglichen bzw. interferometrisch ausgewertet, wodurch die Meßgröße unter Ausschaltung von Störeinflüssen bestimmt werden kann.

16. Verfahren nach Anspruch 15, g e k e n n z e i c h n e t   d u r c h   folgende Merkmale:

a) Die Aufspaltung der Lichtwellen erfolgt durch einen teilweise durchlässigen Spiegel (23, 33d, 43) oder durch ein ähnlich wirkendes optisches Bauteil,

b) Die Unterscheidbarkeit der Anteile wird durch Frequenzfilter (37a, 37b), Polarisationsfilter (7) oder durch frequenzverändernde Beschichtungen (fluoreszierend, phosphoreszierend) hergestellt.

17. Verfahren nach Anspruch 14 oder 15, g e k e n n z e i c h n e t   d u r c h   folgende Merkmale:

a) Es wird Licht mit mindestens zwei deutlich unterscheidbaren Frequenzen zur Meßzelle (1; 21; 31; 41; 51; 61; 71) geführt

b) Durch geeignete Filter (37a, 37b; 38a, 38b) wird bewirkt, daß das Licht einer ersten Frequenz zum ganzüberwiegenden Teil vom Referenzelement (34) reflektiert und zu einem Empfänger (39b) geleitet wird, während das Licht einer zweiten Frequenz zum ganz überwiegenden Teil vom Meßelement (35) reflektiert und zu einem zweiten Empfänger (39a) geleitet wird.

18. Verfahren nach Anspruch 15,
g e k e n n z e i c h n e t  d u r c h  folgende Merkmale:
a) Es wird Licht von nur einer Lichtquuelle zur Meßzelle (1; 21; 31; 41; 51; 61; 71) geführt mit einer Frequenz oder einer geeigneten Bandbreite.
b) Durch eine fluoreszierende oder phoosphoreszierende Schicht auf dem Referenzelement (4;; 23, 24; 34; 44; 54; 64; 74) und/oder dem Meßelement (5; 25; 35; 45; 55; 65; 75) wird eine zusätzliche unnterscheidbare Frequenz erzeugt, die die spätere Unteerscheidung von Meßsignal und Referenzsignal durch geeeignete Filter ermöglicht.

19. Verfahren nach Anspruch 15,
g e k e n n z e i c h n e t  d u r c h  folgende Merkmale:
a) Es wird gepulstes Licht der Meßzellle (1; 21; 31; 41; 51; 61; 71) zugeführt.
b) Eine phosphoreszierende Schicht auff dem Referenzelement (4; 23, 24; 34; 44; 54; 64; 74) odeer dem Meßelement (5; 25; 35; 45; 55; 65; 75) bewirktt eine zeitliche Verzögerung eines der beiden reflekktierten Lichtsignale, wodurch diese zeitlich unterschiedeen und ausgewertet werden können.

0154025

83 P 6741

FIG 1

FIG 2

FIG 3

FIG 4

0154025

83 P 6741

FIG 5

FIG 6

FIG 7

FIG 8

FIG 9

FIG 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 054 292 (SIEMENS)<br>* Ansprüche 1e-1g, 2-5 *<br><br>--- | 1,3 | G 01 D 5/26 |
| X | EP-A-0 096 262 (ASEA)<br>* Seite 2, letzter Absatz *<br><br>--- | 1,5 | |
| A | EP-A-0 091 394 (ASEA)<br>* Seite 5, Zeilen 15-19 *<br><br>--- | 1,5 | |
| A | EP-A-0 025 564 (SIEMENS)<br><br>* Figur 1 * & DE-A-2 937 511 (Kat. D)<br><br>--- | | |
| A | DE-A-3 031 961 (LICENTIA)<br><br>* Ansprüche 1,2; Seite 5, Zeilen 25-37 *<br><br>----- | | |

**RECHERCHIERTE SACHGEBIETE (Int. Cl.4)**

G 01 D 5/26
G 01 L 9/00

Der vorliegende Recherchenbericht wurde für alle Patentansprüche erstellt.

| Recherchenort | Abschlußdatum der Recherche | Prüfer |
|---|---|---|
| BERLIN | 03-05-1985 | FUCHS R |